# EUROPEAN PATENT APPLICATION

(11) **EP 0 978 794 A1**
(43) Date of publication of application: **09.02.2000**
(21) Application number: 99401997.4
(22) Date of filing: 05.08.1999
(51) Int. Cl.: G06F 17/30

(54) **Method and system for processing spatially-referred information such as cartographic information, applications and apparatus implementing said method**

(30) Priority: 05.08.1998 FR 9810075
(71) Applicant: Geofermat, 91140 Villebon sur Yvette (FR)
(72) Inventor: Popovici, Lascar, 92160 Antony (FR)
(74) Representative: Pontet, Bernard

(57) **Abstract**

A system for processing spatially-referred information (spatial data), said information defining objects in a n-dimensions space and comprising for each object information of form, information of position and information of attributes, comprising
- means for structuring said spatially-referred information, by separating the topological information from the information of attributes,
- means for cutting each topologic information into geometric information constituting information of form and information of position,
- means for ordering descriptions of the objects into elementary families having the same attributes, by applying criteria formed into a hierarchy, and
- means for organizing structured information into two distinct tables constituting a block of information containing:
- a topologic table, referred as the corpus, containing, for each elementary family, all the geometric forms defining objects with identical attributes, and
- a table of attributes, referred as the index, containing the semantic and formal attributes, associated to the objects.

## Description

The present invention relates to a method for processing spatially-referred information, i.e. linked to a n-dimensions coordinates system. For example, this processing method can be applied to cartographic information linked to a three-dimensions (x, y, z) euclidian system or biologic information linked to a four-dimensions (x, y, z, t) system.

As a way of non-limitative example, geographic implementations are contemplated, and more particularly geographic information systems (GIS). This expression is indifferently used for three distinct, though linked, entities:
- (a) a data base that includes both geometric shapes of a spatial entity (e.g. a chain of coordinates representing a shape of a lake) and thematic attributes (e.g. for a lake, the maximum depth, the volume, the elevation of a surface, the salinity and the pH),
- (b) a software (such as ESRI by ARC/INFO, or MGE by Intergraph) used for managing, analyzing and displaying data from the data base defined in a),
- (c) a complete system, comprising computers, a software and a data base required for a given implementation (see "GIS Online", Brandon Plewe, ONWORD PRESS, Santa Fe, USA, 1997).

The term GIS will be referred hereinafter as a software like in (b).

Geographic Information Systems operating on spatially-referred information generally structured in vectors, are already known. These software integrate three classes of information that can define an object in space. The three classes of information defining an object include:
- the form, and therefore the geometry,
- the position within space,
- the attributes or characteristics, that can be formal (or of aspect) and/or semantic (or functional), and can be limited to relational data bases (RDB).

In these GIS, a same object can be referred by different persons in different manners in their respective data bases, the correspondence being done by the spatial reference. These software include powerful computer-aided design and draw tools and require important hardware capacities. Operating these software on a personal computer results in a processing slowness that is hardly admissible. Furthermore, present systems are complex and difficult to use by a non-professional.

The main cause for this complexity resides in the huge size of spatial data bases which mix the three classes of precited information. A typical example is the international exchange standard for spatial data, DIGEST (Digital Geographic Information Exchange Standard), prepared and published (1^{st} version, 1.0, June 1991) under the authority of the DGIWG (Digital Geographic Information Working Group). The formats presently used are mainly based on this standard. It was developed in conformity with the VPF format (Vector Product Format) that has been adopted as VRF (Vector Relational Format) by DIGEST. In this format, even if a difference is theoretically made between a "primitive" form and its "attributes" and "features", information are continuously imbricate and inevitably redundant.

Furthermore, document US 5,631,970 discloses a method for identifying simple or complex objects from cartographic data and fusioned raster images. This method, that allows a user to integrate information from multiple sources, implements expert-system and fuzzy-logic techniques. It results in an increase of the capacities of present GIS, without any reduction in the sizes of the used bases or software.

Document W096/23280 discloses a tool for modeling and analyzing three-dimensional entities-objects systems, wherein behavior characteristics can be associated to each object and the interactions between objects can be analyzed.

Document US 5,426,780 also discloses a dynamic-segmentation analysis system using a conversion of relational data into oriented-object data. This system converts fixed-length tables of attributes, stored under the form of columns in a relational table, into tables of attributes and situations with variable length. Such a system operates "at the source" of the information by clarifying it.

Document W096/16375 discloses a method and a system for storing data points in a multidimensional database using binary helical hyperspatial code (HHcode) . In this document, state-of-the-art spatial data storing systems are described, among them relational database management systems (RDBMS) with an hybrid approach including two side-by-side database engines, namely a relational database management system and a spatial database system. The relational database management system (RDBMS) maintains attribute data which is non-spatial and is linked to the spatial database which references or links the corresponding spatial data through spatial indexes. A RDBMS manufactured by Oracle Corporation linked to a spatial database referred to as ARC/Info is cited as an example of an existing hybrid system. The Oracle-ARC/info hybrid database is used to store and manage cartographic projections and similar spatial data in conjunction with attributes relates to the spatial data, but does not analyze and organize said spatial data.

US patent 5,295,261 in the name of Simonetti discloses a hybrid database structure linking navigational fields having a hierarchical database structure to informational fields having a relational database structure. The conversion method disclosed in this document comprises steps of separating a plurality of fields into navigational fields and informational fields, ordering said navigational fields into a plurality of node classes and links therebetween, identifying among the plurality of distinct hierarchical data structures one data structure having at least one geographical class in common, merging portions of distinct hierarchical data structures having one or more geographic classes in common by linking said structures to a single node class, and creating for each node class in the merged hierarchical data structure a table comprising an identifier describing the geographical class represented by the node class, an enumeration list encompassing the geographical values of said node class, and a plurality of linkage structures.

US patent 4,843,569 in the name of Sawada et al. discloses a data input apparatus for a computer-aided picture data base management system. It cites as prior art data base management systems used in computer-aided geographic mapping systems wherein each object is written with attribute data that consists of characters or symbols representing the object's attribute information. This document discloses automatic data merging means connected to vector data generation means and attribute data input means, for automatically merging plural sets of vector data of extracted picture objects with plural sets of attribute data through identification labels in such a manner that one set of attribute data is combined with vector data having the same identification label.

A primary drawback of the hybrid approach as taught in cited documents is the requirement of maintaining two discrete database engines, and a proprietary data structure using unique spatial indexes. Moreover, this hybrid approach results paradoxically in a substantial increase in the size and the complexity of the index. Another disadvantage of these hybrid systems is that it has lead to the development of "exchange standards" defining standard data format enabling reading data created in one system by another.

More generally, existing systems require too complex computer processing and important data storage means, whatever their format. Miniaturizing these systems in view of integrating for example into an electronic apparatus is hardly conceivable.

The aim of the invention is to remedy these drawbacks by proposing a method for processing spatially-referred information stored in spatial data bases, that allows a substantial reduction of the volume of stored data and of the size of processing software.

This aim is reached with a system for processing spatially-referred information ("spatial data"), such as cartographic information, said information defining objects in a n-dimensions space and comprising for each object information of form, information of position and information of attributes, characterized in that it comprises:
- means for structuring said spatially-referred information, by separating the topological information from the information of attributes, and
- means for cutting each topologic information into geometric information constituting information of form and information of position.

The spatial data processing system according to the invention advantageously further comprises:
- means for ordering descriptions of said objects into elementary families having the same attributes, by applying criteria formed into a hierarchy, and
- means for organizing structured information into two distinct tables constituting a block of information containing:
   - a topologic table, referred as the corpus, containing, for each elementary family, all the geometric forms defining objects with identical attributes, and
   - a table of attributes, referred as the index, containing the semantic and formal attributes, associated to the objects.

Thus the invention consists in a systematic structuration of information wherein topologic information are separated from attribute information. Such a separation was indeed found as allowing both a simplification of the stored data and a simplification of their processing by reducing the size of information to be simultaneously processed during most of the stages.

"Topologic information" is used as form information and position information.

For a good understanding of the concepts used in the preferred versions of the processing methods according to the invention, a precise definition of the terms "Form", "Object", "Attribute" used here is provided.

**"Elementary Form"** means a set of geometric data in a n-dimensions space, that defines an elementary image, for example a line, a polygon, a circle or an arc. An elementary form constitutes a "complete" topologic information (form and position), since all is expressed in an unique and same coordinates system: When a line from A(X_{A},Y_{A}) to B(X_{B},Y_{B}) is defined in analytic geometry, it is both cited as a straight line and as being located in the bidimensional euclidian space at the X_{A},Y_{A} - X_{B},Y_{B} position.

Preferably, according to the invention, at least the following elementary forms are used :
- line: segment between two points, isolated or being part of an open or closed polygon ;
- arc : segment of curve between two points (the line can of course be considered as an arc with an infinite curvature radius).

It is also preferred not to use other elementary forms.

A set of elementary forms can constitute a **" complex form "** when it is interesting to do it. Thus, several lines and arcs can constitute a complex form like "⊗", a complex form that can be repetitively used in an installation plan requesting a display of water gates within a drinkable water network. A complex form can be parametrable, i.e. affected by scale factors according to the space axis. Moreover, a complex form can be recursive, i.e. defined from other complex forms.

Similarly, three segments of line can constitute the letter A, that is another set of elementary forms that is used in a repetitive manner in a " character chain " for an application requiring **text** drawing.

As a way of generalization, the generic expression " geometric form " means any simple, repetitive and topologically complete constitutive element, (i.e. defining an " image " and having a localization in the space), entering in the composition of a topologic description of the object.

" **Object** " means a set of forms having a physic or intellectual meaning, for example, a lake, an organ, a metallic piece, a frontier or a service.

" **Attribute** " means a characteristic, a property, of an object. The attribute can be semantic or formal.

A semantic attribute of an object can be qualitative, either be physic (for a " glass " front) or abstract (for a " toll " road), or quantitative (for a bridge with a " 100 m span").

A formal attribute is an aspect and visual representation attribute of the object : a " bright " organic tissue, a " red " lining, a " discontinuous " or " dashed" line, etc.

According to still another aspect of the invention, there is proposed a method for processing spatially-referred information, said information defining objects in a n-dimensions space and comprising for each object topologic information and information of attributes, characterized by an organization of said information into two distinct tables:
- a topologic table, referred as the corpus, containing a sequence of elementary families, each successive elementary family being formed with basic forms defining objects or parts of object with identical attributes, and
- a table of attributes, referred as the index, containing the semantic and formal attributes associated to said objects, including their graphic attributes of representation.
These two tables constitute a "**block**".

In a preferred embodiment of the method according to the invention, three types of geometric forms are used : elementary forms, texts (chains of characters, even reduced to a single character) and complex forms.

According to the invention and with above definitions, the method is preferably characterized by a systematic structuration of the information for a given application, that is held on two fronts :
- choosing in the n-dimensions space geometric forms constituting the basic topologic information, for example lines, complex forms and texts ; then decomposing the available " source " topologic information and thus obtaining sets of these predefined forms ; as the forms comprise geometric information and position information, the form and the position of each object of the application are simultaneously described by combining several of said geometric forms ; and
- defining for a given application a hierarchized set of **criteria** related to the permanent attributes for the application, and by applying the criteria in the order of their hierarchy, sorting the objects composing the global object of the application, into a set of elementary families each constituted by objects having exactly the same attributes. For example, in an application of forest management, where the interesting objets are the trees, a first criterion is for example the forest type (natural, " reforesting ", "working", etc.), a second hierarchically inferior criterion is the " species ", then the age ; etc.

Thus, the objects are ordered in the most pertinent way for the application. The most frequent operating mode consists in selecting a criterion and in calling the whole set of sub-families satisfying said criterion.

The method according to the invention may include a keyword-type quest, for example consisting in, in the previous example, addressing all the essences of the same age, but the criteria hierarchy suitably chosen for the application, causes the need for this type of quest to be less probable since it requires more computer means.

In a preferred embodiment of the method according to the invention, the objects having exactly the same attributes require different geometric forms in order to be completely topologically defined, for computing efficiency reasons, the families obtained by the last rank of division in function of the attribute criteria, as they have only objects of same attributes, can again be sub-divided at least once in function of topologic criteria to get the desired elementary families.

Obtaining the elementary families can be explained in the following manner: the objects of the application are grouped into families by applying a first criterion, hierarchically higher. These families can be sub-divided by applying a second criterion into sub-families, that can also be sub-divided. The subdivision is stopped when the families all the objects of which have identical attributes are reached and can constitute the elementary families. But the subdivision can go on at an additional level for the objects having the same attributes but topologically composed with different geometric forms. Each last subdivision then comprises objects having the same attributes but also similar geometric forms (elementary, complex forms or texts).

A form defined in the space appears only in - but in all - the elementary families of the objects that own it in the space: thus for example, a segment AB which defines the side of an estate will appear in the elementary families of the estate contours. If the segment AB in fact also describes the edge of the sidewalk which borders the estate, it will appear a second time in the elementary families of the sidewalk edges. This apparent redundancy is mandatory, since **a form has no attribute in itself.** It receives its attributes from the elementary family to which it belongs (from the object that said elementary family defines).

For associating the objects of an elementary family and their attributes, the simplest correspondence mode is preferably chosen: it consists in a correspondence between the position of the topologic information within the corpus and the position of the attributes within the index. It has to be noted that it is possible to introduce additional indexations, for example of the sequential-indexed type.

An exact structuration of the information and an organization of the information in two distinct tables between which a correspondence mechanism is established, provide with a concision of the information that results in an increased efficiency in the spatial data base processing from the implementation of said method.

Another aspect of the invention concerns an application of the method according to the invention, for making blocks of structured information from pre-existent spatially-referred information stored in files under any format, each structured-information block comprising a corpus and an index.

More particularly, the following steps are contemplated:
- defining a hierarchy of criteria of attributes in function of the application,
- analyzing a set of basic forms (lines, arcs, texts, complex forms) and a mathematical manner of representation, suited to the required functions (type and number of coordinates, linear or non linear equations, etc.), depending on the type of information and the aim of the application,
- building from the analyzed source a topologic table of forms (corpus) and a table of attributes (index),
- choosing a mechanism of correspondence between the corpus and the index, and
- ordering (sorting) the elementary families of the block.

The processing system according to the invention can advantageously further comprise display means and operating means on one or more blocks of topologic information.

The display and operating means preferably comprises modules for operation on the blocks of topologic information and functions depending on the concerned application and on the apparatus wherein this system is implemented.

According to still another aspect of the invention, it is proposed an electronic apparatus comprising display means, means for acquiring data and controls and means for storing information, characterized in that it further includes a processing system according to the invention, and in that one or more blocks of structured information according to the invention are contained in the information storage means.

Said apparatus is preferably a pocket apparatus, but also may be a portable, laptop or desktop, device.

This apparatus can advantageously designed for downloading one or more blocks of topologic information.

It can also be connected to mobile communication means, for communicating with a topologic data base server.

The method and the system according to the invention can also have applications in any domain wherein objects are processed and visual representations of said objects are used. For example, it concerns the sector of the assistance to the navigation, the assistance to the orientation, and the assistance to a path selection. Other applications of the method concern weather forecast, road traffic information, medical imaging, astronomy and geomarketing.

These and other objects of the present invention will become apparent to those skilled in he art from the following detailed description of the present invention and the accompanying drawings.
- FIG.1 features an arborescent organization representing a hierarchic gathering of the objects of a given application, implemented with the method according to the invention; this organization will be detailed in the following geographic example;
- FIG.2 illustrates the simplest mode for associating the corpus with its index: by means of a "position correspondence" between the corpus of objects, where elementary families are ordered from F₀₀₀₀₀ to F_{pqrst}, and the index (their respective attributes), also ordered from F₀₀₀₀₀ to F_{pqrst} ;
- FIG.3 is a flow chart illustrating the essential steps of a sequence for building a topologic block within the method according to the invention ;
- FIG.4 is a scheme of an embodiment of the method according to the invention for a path selection apparatus;
- FIG. 5 illustrates an example of correspondence between a table of forms and a table of attributes; and
- FIG.6 illustrates an example of repartition of attributes into elementary families according to the invention, for objects in the VMAP level 1 Format.

First, the main principles on which the method according to the invention is based, are presented, with practical examples of implementation.

Two types of information are considered:
- topologic information:
   the geometric form
   the position
- attributes:
   formal (or aspect)
   semantic (or functional)
   of graphic representation (display)

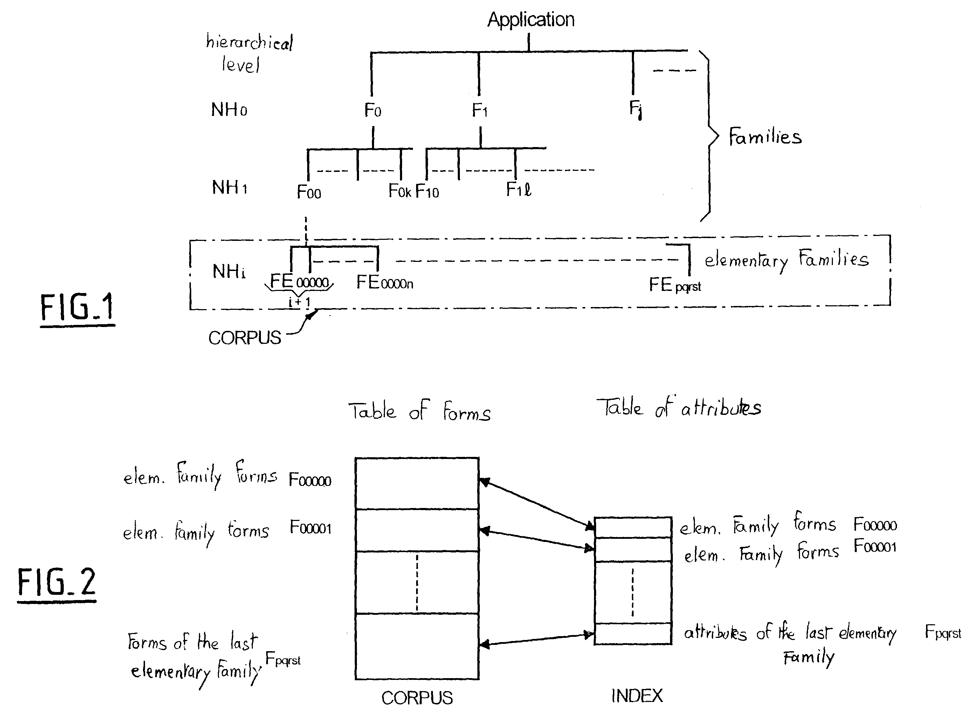

The hierarchic gathering of objects for a given application leads to an arborescent organization, as illustrated by FIG. 1, that uses the three following notions:
1. hierarchic level NH
2. generic family F, without any precision on the level, and
3. elementary family FE, which is the family with the lowest hierarchic level.

In most of the applications, the objects are defined by several geometric forms. For reasons of efficiency and flexibility, it is recommended to gather into distinct elementary families the simple forms (line, arc, ellipses), the complex families and the texts. These elementary families don't contain a complete object, but its parts.

Gathering topologic information into a single table by juxtaposing the elementary families, referred as corpus of forms, provides with concision of data, concision and efficiency of software designed for processing said information, and flexibility. The corpus indeed becomes a matrix of coordinates that can be easily used for analytic geometry techniques. Furthermore, the homogeneity in the structure of the corpus of forms allows developing powerful and concise algorithms for previously complex operations (for example, quests for objects - accordingly for forms - in a connexe multiple polygonal area, i.e. comprising exclusion zones).

Pre-existent, already created and stored in file with their own format, spatially-referred information is considered. The method according to the invention is applied under the form of a software for structuring data, that produces blocks of structured information.

The block of topologic information, constituted by the pair corpus↔index, is necessary and sufficient for all processing that an user would make for a given application. The system according to the invention further comprises a software for display and operation, working as a dedicated graphic editor, that must comprise two groups of functions or modules :
- Specific modules for operating on the block (corpus and index), that directly depend on its structure and are independent of any semantic meaning ;
- required specific functions, that depend on the concerned application and on the apparatus on which it is operated.

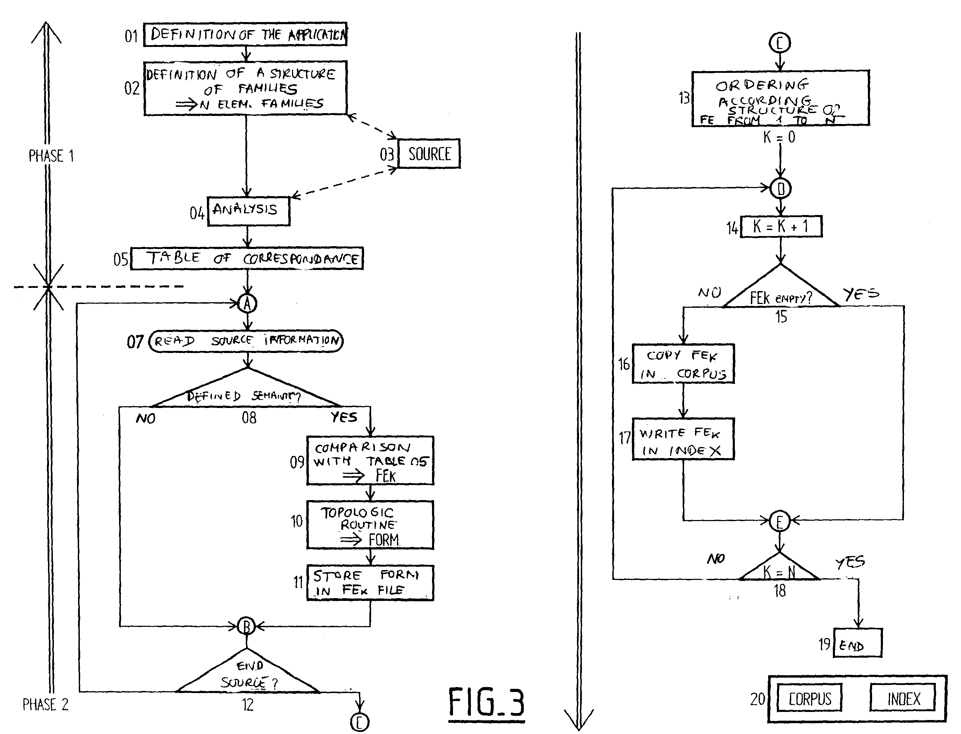

The essential steps for the implementation of the processing method according to the invention are then described, with reference to FIG.3. In view of illustrating them, the method is applied to an existing cartographic information source : the Digital Chart of the World (DCW) - produced by the cartographic agencies of the USA, Australia, Canada and Great Britain and distributed since 1992. This data base has been chosen as an example since it was developed in conformity with the VPF format (Vector product Format) that has been adopted as VRF (Vector relational Format) by DIGEST (Digital Geographic Information Exchange Standard).

A first phase comprises a stage for defining a structure of object families in function of the concerned application, and a stage for analyzing information provided by the source in view of distinguishing what is related to topologic information and what is related to attributes. This corresponds to steps **01** to **05** in FIG. 3.

More generally, applying the method according to the invention implies first asking two questions :
- what is the domain of application?
- What are the functions to be provided by the display and operating software?

Practically, in this example of application to vector cartography, the aim is to get blocks of structured information representing territories defined in the world data base (with an available digitalization) in order to provide digital maps to leisure aircrafts. For example, it is expected to get, with the display and operating software, blocks that could be displayed on a screen, zoom effects, object selecting or pointing functions, object modifying and possibly suppressing functions, and an opportunity for integrating a positioning function by GPS (Global Positioning System) . That is the step (**01**) of definition of the application.

The structure of the families is then defined in function of the application: "great" families F₀, F₁,.. F_{J},.. F_{P} are defined by the highest hierarchic criterion, then, for each of these families, the families with an immediately lower hierarchic level are defined, up to elementary families FE. A table of definition of the families of the application is obtained (**02**), that contains N elementary families FE, from FE₀₀₀₀₀ to FE_{pqrst}.

In the example of cartography, this definition is first semantic and then topologic. In the first hierarchical level Nho, 12 classes are distinguished, with a closest following of the model of "feature categories" (coverages) of the DCW source (**03**).

In a second level NH1, a subdivision up to 4 groups is sufficient for this type of application. For example, the following subdivisions are obtained:

| **NH**_{**0**} | **NH**_{**1**} | **DESCRIPTION** |
|---|---|---|
| **01** | | **COASTS, BORDERS** |
| | 1 | Coasts, shores, banks (oceans, seas, estuaries, great lakes) |
| | 2 | Physical bars (incident on the delimitation of the grounds) |
| | 3 | International Borders (limits) |
| | 4 | National administrative limits |

| **02** | | **ALTIMETRY** |
|---|---|---|
| | 1 | Hypsography (isohypses, altitudes) |
| | 2 | Bathography (isobathes, depths) |

| **03** | | **TERREST HYDROGRAPHY** |
|---|---|---|
| | 1 | Natural |
| | 2 | Artificial |

| **04** | | **PHYSIOGRAPHY** |
|---|---|---|
| | 1 | Geology |
| ... | ... | Etc... |

It has to be noted that the definition of the structure of the object families can present a degree of acuteness that is variable in function particularly of objectives of precision and resolution and of practical constraints.

The following step (**04**) consists in the analysis of the source which has its own format. The topologic information and the attributes are identified. Thus, for example, for the edges, a link between the "primitive" (the line which comprises the coordinates of the ends) and its different attributes ("features"), by examining not only the matrix of the edges, but also the matrix of the "nodes" (the ends) and of the "faces" (if existing).

A table of correspondence (**05**) is thus obtained between the values of the different attributes used by the source ("feature tables") and the corresponding elementary families of the defined structure. For example, for the large family of land hydrography, the lines which have in the DN (drainage) source LNTYPE=2 and LNSAT=3 and which represent banks of lakes (inside lands) will be attributed to the elementary family 03.1.07 with a hierarchical level 2 according to the following hierarchical structure:
- NH0 - 03.0.00 - LAND HYDROGRAPHY
- NH1 - 03.1.00 - Natural
- NH2 - 03.1.01 - Main waterways
- 03.1.02 - Other permanent waterways
- 03.1.03 - Intermittent waterways
- 03.1.04 - Dry waterways (beds)
- 03.1.05 - Waterways with unknown rate of flow
- 03.1.06 - Remarkable spots of waterways
- 03.1.07 - Banks, lakes
- etc.

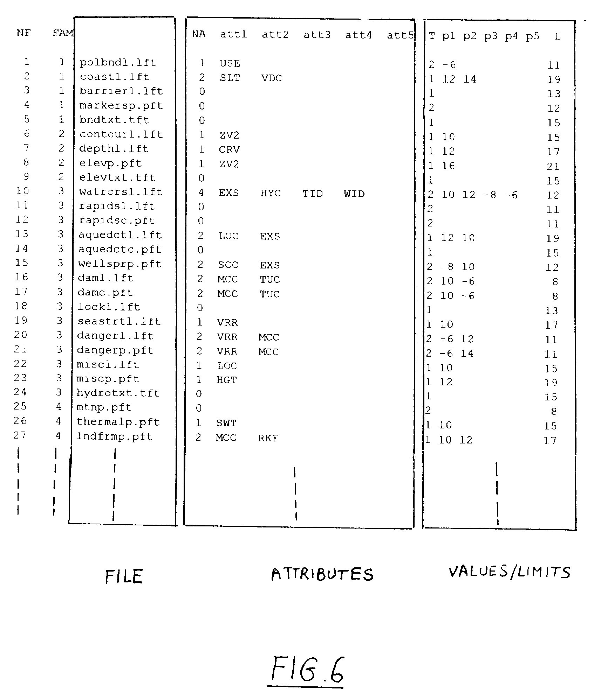

As a way of example, FIG.6 illustrates how attributes of objects stored in a VMAP level 1 Format can be distributed into layers or elementary families according to the present invention.

The topologic information are then analyzed in order to choose a set of forms to use and digital form of representation depending of required functions.

In the case of the DCW which utilizes only two geometric primitives, the point and the polygonal line, the following geometric forms can be selected:
- elementary forms:
   the lines,
   the open polygons or polylines
   the closed polygons
- complex forms ("symbols")
- texts.

Moreover, as the altitude of the objects is not present in the DCW, plane coordinates can be used.

In a second stage, the structuration software is implemented. The most simple corpus-index correspondence, the correspondence by the position, is selected. The information source comprise:
- topologic information which, after processing, provide with forms,
- semantic information which, by means of the table of correspondence **05** (between the attributes of source **03** and the defined elementary families **02**), determine the belonging of these forms to said families.

A preferred embodiment for the software of structuration is illustrated in FIG.3.

The source (DCW files) is browsed and each information (**07**) having a recognizable semantic **08,** is attributed to an elementary family FE **09,** by means of the table **05**. In the following, as a way of simplification of the description of the software, the index with i+1 characters of the FE families (for example, five characters in FIGS. 1 and 2), is referred as the letter "K". K=1 corresponds to the index "00001", K=n to the index "0000n", K=n+1 to the index "00010", K=n+2 to the index "00011", etc., up to K=N corresponding to the index "pqrst". By means of a topologic routine, the source entity (edge, face, nod) is transformed (**10**) into a form which is recorded in the table (or file) Fek (**11**). The procedure is stopped when the source is exhausted (**12**).

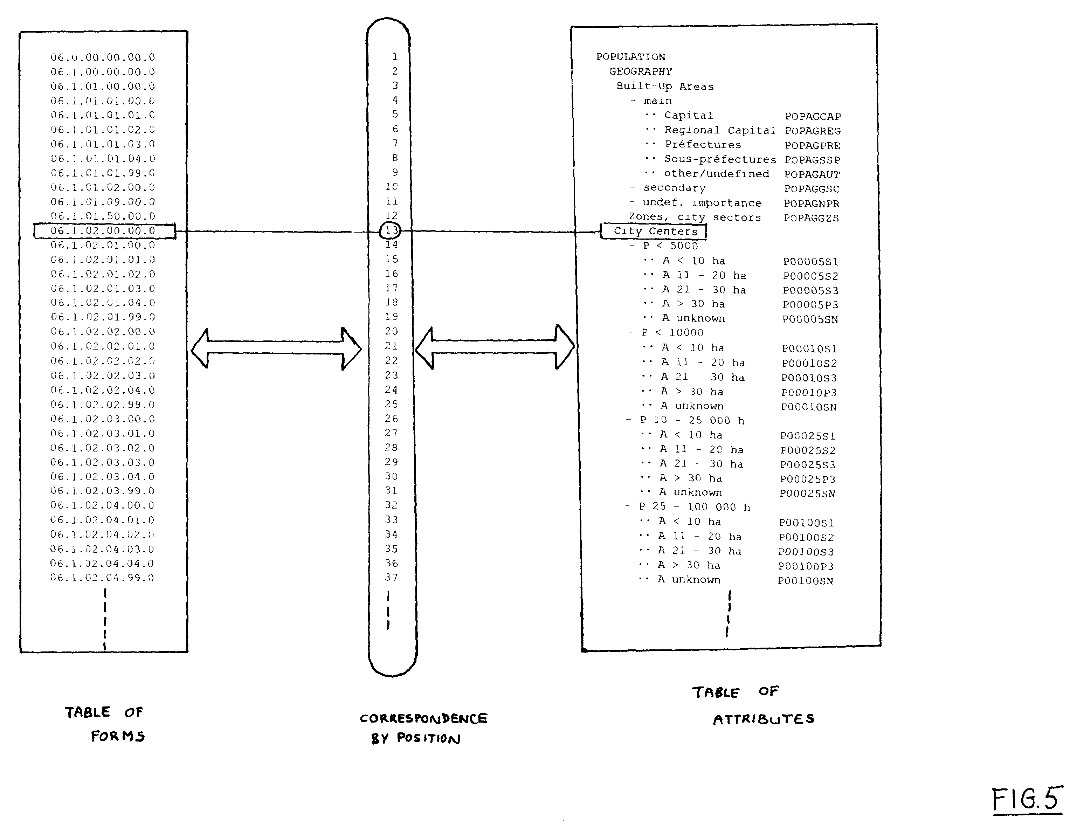

The following step consists in making an ordering of the form tables (or files) of the families FE, in order to get an ordered form table which constitutes the corpus. A mechanism of correspondence between the ordered table of forms and the table of attributes is launched. It can be implemented under the form of a simple correspondence of position between these two tables, as illustrated by FIG.5 which features extracts from a table of forms and a table of attributes concerning "population" matters.

The ordering is thus obtained by browsing the table of definition of the hierarchical structure (**14**), with K equal to 1 to N. For each FEk the form table of which is not empty, said Fek is copied in the corpus, following previous ones (**16**). The attributes of the non empty family Fek are also written in the index (**17**). The ordering is finished when all the predefined FE have been reviewed (**18**).

The set formed by the table of forms (corpus) and the table of attributes (index) constitutes a block of topologic information (**20**).

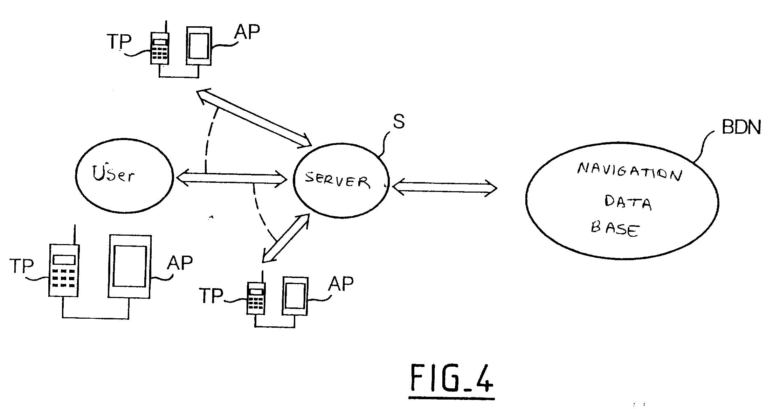

A practical example of implementation of the method according to the invention is then described, with reference to FIG.4, for making a system of navigation or orientation assistance. This system is implemented in pocket apparatus AP of the electronic planner or PDA (personal digital assistant) type (handheld PC or H/PC, Palm Pilot®), and uses a communication server S, and a navigation data base BDN. The handheld apparatus AP is provided with a display software and one or more blocks of structured information. An apparatus implementing the method according to the invention further includes an operating system, character polices files, screen drivers and possibly peripherals.

From this apparatus AP connected to a mobile phone TP operating for example on a GSM network, a user can ask a following question: "How going from a point A to a point B depending on the actual road traffic ?". This question is transmitted via the communication server S to the data base BDN which in return delivers an answer to said question. This answer is processed by the operating software within the apparatus, which generates a display of the proposed path on the map. It is also possible to compute an optimal path directly within the apparatus AP if traffic information is provided to it.

Numerous functionalities can be implemented in an apparatus according to the invention. Thus, structured information blocks can be downloaded upon an user's request and depending on the geographical areas wherein said user is located or interesting him. Downloading can be implemented for example via Internet from a computer connected to the apparatus according to the invention, or from a mobile phone via a cellular or satellite communication network. Information stored in the structured information blocks can also be refreshed, either periodically or upon request.

Other types of electronic devices, either pocket-size, desktop or laptop, integrating a processing system according to the invention, can be considered, when said devices achieve functions implementing spatially-referred information. Thus, the present invention can also find applications in other fields than the navigation assistants, for example, in the field of computer aided drawing, for displaying graphical information collected and transmitted on a communication network like Internet, or in medical imaging systems.

The processing system according to the invention can be implemented as a software with numerous embodiments using any storage technique and language chosen in function of hardware and software constraints linked to aimed functionalities.

Moreover, in the stage of information structuring, the level of accuracy of the hierarchized structure has no other limit that the limit dictated by the constraints of information storage and by the abundance of pre-existing information sources. Furthermore, other correspondence techniques differing from the correspondence position can be encountered.

There has been described herein a novel system and method for processing spatially-referred information. Various modifications to the present invention will become apparent to those skilled in the art from the foregoing description and accompanying drawings. Accordingly, the present invention is to be limited solely by the scope of the following claims.

## Claims

1. A system for processing spatially-referred information (spatial data), said information defining objects in a n-dimensions space and comprising for each object information of form, information of position and information of attributes, characterized in that it comprises:
- means for structuring said spatially-referred information, by separating the topological information from the information of attributes, and
- means for cutting each topologic information into geometric information constituting information of form and information of position.

2. The system according to claim 1, characterized in that it further comprises:
- means for ordering descriptions of the objects into elementary families having the same attributes, by applying criteria formed into a hierarchy, and
- means for organizing structured information into two distinct tables constituting a block of information containing:
- a topologic table, referred as the corpus, containing, for each elementary family, all the geometric forms defining objects with identical attributes, and
- a table of attributes, referred as the index, containing the semantic and formal attributes, associated to the objects.

3. The system according to claim 2, characterized in that the cutting means are arranged for describing simultaneously the form and the position of each object by combining several of said geometric forms.

4. The system according to claim 3, characterized in that it further comprises means for selecting, as at least several of said geometric forms, basic forms composed from elementary forms.

5. An electronic apparatus comprising display means, means for acquiring data and controls, and means for storing information, characterized in that said means for storing information contain one or more blocks of structured information obtained by the processing system according to any of claims 1 to 3, and in that it further comprises means for operating said block(s) of information.

6. The apparatus according to claim 5, characterized in that it is arranged for providing a downloading of one or more blocks of topologic information via a data transmission network.

7. The apparatus according to claim 5 or 6, characterized in that it is arranged for providing an access to services of assistance, particularly for road traffic or meteorology.

8. A method for processing spatially-referred information, said information defining objects in a n-dimensions space and comprising for each object topologic information and information of attributes, characterized by an organization of said information into two distinct tables:
- a topologic table, referred as the corpus, containing a sequence of elementary families, each successive elementary family being formed with basic forms defining objects or parts of object with identical attributes, and
- a table of attributes, referred as the index, containing the semantic and formal attributes associated to said objects, including their graphic attributes of representation.

9. The method according to claim 8, characterized in that it further comprises a mechanism of correspondence between the corpus and the index.

10. The method according to claim 9, characterized in that the mechanism of correspondence consists in a correspondence of position between the topologies in the corpus and the attributes in the object.

11. The method according to any of claims 8 to 10, characterized in that a hierarchical set of criteria related to the attributes of the objects is defined for a given application, and in that the objects are classed into elementary families containing only objects or parts of object having the same attributes by applying the criteria in the order of their hierarchy.

12. The method according to claim 11, at least a sub-family of objects having the same attributes is sub-divided into elementary families in function of at least one topologic criterion.

13. The method according to claims 11 or 12, characterized in that groups of objects comprising one or more elementary families selected in function of the hierarchic level of the criterion of attributes that is used, are globally operated.

14. The method according to claim 11, characterized in that objects are operated by calling a criterion present in at least two branches of the hierarchy of said criteria.

15. An application of the method according to any of said claims 8 to 14, for making blocks of structured information from pre-existing spatially-referred information stored in files under any format, each block of information comprising a corpus of topologic information and an index of attributes.

16. An application according to claim 15, characterized by the following steps:
- defining a hierarchy for criteria of attributes in function of the application,
- analyzing a source of information for identifying on one hand the topologic information, and, on the other hand, the attributes,
- choosing a set of basic forms in function of the nature of information and of the aim of the application,
- building a topologic table of forms (corpus) and a table of the attributes (index),
- building a mechanism of correspondence between said table of forms and said table of attributes, and
- arranging the elementary families of the block.
